# FASCICULE DE BREVET EUROPEEN

(11) **EP 0 662 982 B1**
(45) Date de publication et mention de la délivrance du brevet: **03.12.1997**
(21) Numéro de dépôt: 93920804.7
(22) Date de dépôt: 23.09.1993
(51) Int. Cl.: C08G 18/67, C08G 18/81, C08G 18/68, C08K 13/04, C08K 7/14

(54) **COMPOSITIONS DE RESINES CHARGEES MOULABLES EN MASSE APTES A ETRE TRANSFORMEES PAR INJECTION ET LEUR APPLICATION A LA PRODUCTION DE PIECES MOULEES**
ZUSAMMENSETZUNGEN VON ZUM SPRITZGIESSEN GEEIGNETEN MASSEFORMBAREN UND FÜLLSTOFFE ENTHALTENDEN HARZEN SOWIE IHRE VERWENDUNG ZUR HERSTELLUNG VON FORMTEILEN
FILLED BULK MOULDABLE RESIN COMPOSITIONS FOR INJECTION MOULDING AND APPLICATION IN THE PRODUCTION OF MOULDED PARTS

(30) Priorité: 23.09.1992 FR 9211325
(43) Date de publication de la demande: 19.07.1995
(73) Titulaire: CRAY VALLEY SA, 92800 Puteaux (FR)
(72) Inventeur: LECOINTE, Jean-Philippe, F-93600 Aulnay Sous Bois (FR); ACEVAL, Hélène, F-11100 Narbonne (FR); DOLLE, Marianne, F-60100 Creil (FR)
(74) Mandataire: Jolly, Jean-Pierre
(86) Numéro de dépôt international: EP9302576
(87) Numéro de publication internationale: WO9406841

(56) Documents cités:
- EP-A- 0 007 778
- EP-A- 0 020 041

## Description

La présente invention se rapporte à des compositions chargées à base de résines durcissables, en particulier de polyesters insaturés, moulables en masse et transformables par injection.

On connaît déjà des compositions moulables en masse comprenant des charges minérales en poudre, des fibres de verre courtes, une résine polyester insaturée et un polyisocyanate organique, transformables par injection et utiles pour la fabrication de pièces moulées pour l'industrie.

Il est connu d'épaissir une résine polyester insaturée, comprenant d'une part le produit de la polycondensation d'un acide ou anhydride dicarboxylique α, β- éthyléniquement insaturé et d'un dialcool ou d'un oxyde d'alkylène et d'autre part un monomère éthyléniquement insaturé - de préférence vinylaromatique - copolymérisable avec ledit produit de polycondensation, en le faisant réagir avec un polyisocyanate organique. Cette réaction, par la formation de liaisons uréthanes, entraîne une rigidication de la chaîne polymère et par conséquent des propriétés mécaniques améliorées pour le matériau résultant.

Le problème que la présente invention vise à résoudre consiste donc à définir une méthode d'épaississement de résine polyester insaturée chargée au moyen de polyisocyanate organique qui assure à cette résine des propriétés mécaniques de niveau supérieur à celui des méthodes connues jusqu'à présent. Ce besoin se fait tout particulièrement sentir pour la mise au point de formulations adaptées à l'obtention de compositions moulables en masse (dites BMC d'après l'abréviation anglaise correspondante) et transformables par injection, qui comportent généralement des fibres de verre courtes, des charges minérales en poudre ainsi que le cas échéant divers additifs (catalyseur, retardateur de flamme, pigment, etc.). Le moulage de ces compositions par injection ou compression permet notamment de fabriquer des pièces de petite surface pour l'industrie automobile (optiques de phares par exemple) ainsi que des pièces pour appareils électroménagers telles que semelles de fer à repasser.

On connaît par les documents FR-A-2.231.703, EP-A-007.778, EP-A-132.295 et EP-A-0020.041 des résines uréthane-ester vinylique obtenues par réaction d'un polyisocyanate, d'un ester à terminaison hydroxyle de l'acide acrylique ou méthacrylique et d'un polyoxyalkylène bisphénol A. Certaines d'entr'elles permettent, par addition de fibres de verre longues, d'obtenir des compositions moulables en feuilles qui sont ensuite moulées par compression à 140°C pendant 5 minutes. D'autres permettent d'obtenir des compositions réticulées à température ambiante pendant 24 heures.

Pour résoudre le problème technique posé, un premier objet de la présente invention consiste en des compositions moulables en masse comprenant des charges minérales en poudre, des fibres de verre de longueur au plus égale à 15 mm, un monomère éthyléniquement insaturé et une phase polymère durcissable qui est le produit de la réaction
d'au moins une résine polyester insaturée qui est un polyester polyol de fonctionnalité en groupement hydroxyles au moins égale à 1,5, obtenu par polycondensation d'acides ou d'anhydrides polycarboxyliques α,β éthyléniquement insaturés, le cas échéant en mélange avec des acides ou des anhydrides polycarboxylique saturés, et de diols aliphatiques saturés,
avec au moins un diisocyanate organique et
au moins un (alk)acrylate d'hydroxyle.
Ces compositions se caractérisent en ce que
le rapport molaire des fonctions NCO du diisocyanate organique aux fonctions hydroxyles de l'(alk)acrylate d'hydroxyle, r = NCO/OH, est compris entre 0,6 et 1,1.

La masse moléculaire de la résine polyester insaturée n'est pas critique et peut varier dans une gamme importante, généralement comprise entre 250 et 5000 environ et plus particulièrement entre 350 et 2500. Sa teneur en eau ne doit pas être supérieure à 3 000 ppm environ, de préférence pas supérieure à 1 000 ppm environ.

Des acides ou anhydrides polycarboxyliques insaturés utilisables comprennent notamment les acides maléique, fumarique, chloromaléique, citraconique, métaconique, itaconique, tétraconique ou similaires ou, lorsqu'ils existent, les anhydrides correspondants. Des acides ou anhydrides polycarboxyliques saturés utilisables pour remplacer partiellement, par exemple jusqu'à 95 % en moles environ, et de préférence jusqu'à 45 % en moles environ, les acides ou anhydrides insaturés, comprennent notamment les acides orthophtalique, isophtalique, téré-phtalique, succinique, méthylsuccinique, adipique, sébacique, tétrabromo-phtalique, tétrachlorophtalique, glutarique, pimélique ou similaires ou, lorsqu'ils existent, les anhydrides correspondants.

Parmi les alcools polyhydriques utilisables, on préfère généralement les diols aliphatiques saturés tels que l'éthylène glycol, le propylène glycol, le butylène glycol, le diéthylène glycol, le dipropylène glycol, le triéthylène glycol, le tétraèthylène glycol, le 1,3-butanédiol, le 1,4-butanédiol, le tripropylèneglycol, le pentanédiol, l'hexanédiol et le néopentylglycol.

Lorsque la résine polyester insaturée est préparée à partir d'anhydride maléique, il est avantageux d'effectuer leur préparation en présence de morpholine afin d'augmenter le taux d'isomérisation des fonctions maléates en fonctions fumarates. La quantité de morpholine utilisée dans ce cas peut atteindre jusqu'à 1 % en poids, et est de préférence comprise entre 0,1 % et 0,5 % en poids du polyester.

Un autre composant de la composition moulable en masse selon l'invention est le monomère éthyléniquement insaturé copolymérisable avec le polyester insaturé afin de générer une structure réticulée. Ce monomère peut être choisi parmi le styrène, les styrènes substitués comme le vinyltoluène, le tertio-butylstyrène, l'alphaméthylstyrène, le chlorostyrène, le dichlorostryrène, les esters d'alkyle inférieur (C₁ à C₈) d'acide acrylique et d'acide méthacrylique, les acrylates et méthacrylates cycliques, comme ceux de cyclohexyle et de benzyle, les méthacrylates et acrylates bicycliques comme ceux d'isobornyle, le phtalate de diallyle, le maléate de diallyle, le fumarate de diallyle, le cyanurate de triallyle, l'acétate, le crotonate et le propionate de vinyle, le divinylether, les diènes conjugués tels que le butadiène-1,3, l'isoprène, le 1,3-pentadiène, le 1,4-pentadiène, le 1,4-hexadiène, le 1,5-hexadiène, le 1-9-décadiène, le 5-méthylène-2-norbornène, le 5-vinyl-2-norbornène, les 2-alkyl-2,5-norbornadiènes, le 5-éthylidène-2-norbornène, le 5-(2-propenyl)-2-norbornène, le 5-(5-hexenyl)-2-norbornène, le 1,5-cyclooctadiène, le bicyclo [2,2,2] octa-2,5-diène, le cyclopentadiène, le 4,7,8,9-tétrahydroindène et l'isopropylidène tétra-hydroindène, et les nitriles insaturés tels que l'acrylonitrile et le méthacrylonitrile ainsi que les (méth)acrylates de polyol comme les diacrylates et diméthacrylates de l'éthylèneglycol, du propylèneglycol, du 1,3-butanédiol, du 1,4-butanédiol, du 1,6-hexane-diol, du néopentyl-glycol, du 1,4-cyclo-hexane-diol, du 1,4-cyclo-hexane-diméthanol, du 2,2,4-trimé-thyl-1,3-pentanédiol, du 2-ethyl-2-méthyl-1,3-propanédiol, du 2,2-diéthyl-1,3-propanédiol, du diéthylèneglycol, du dipropylèneglycol, du triéthylène-glycol, du tripropylèneglycol, du tétraéthylèneglycol, du tétrapropylène-glycol, du triméthyloléthane, du triméthylopropane, du glycérol, du pentaérythritol, les triacrylates et triméthacrylates du triméthyloléthane, du triméthylolpropane, du glycérol, du pentaerythritol, les tétraacrylates et tétraméthacrylates du pentaerythritol, les di(meth)acrylates à hexa(meth)-acrylates du dipentaerythritol, les poly(meth)acrylates de polyols mono- ou polyéthoxylés ou mono- ou polyproxylés tels que le triacrylate et le triméthacrylate du triméthyol-propane triéthoxylé, du triméthylolpropane tripropoxylé, le triacrylate et le triméthacrylate du glycérol tripropoxylé, le triacrylate, le triméthacrylate, le tétraacrylate et le tétraméthacrylate du pentaérythritol tétraéthoxylé, et leurs mélanges en toutes proportions.

La composition moulable en masse selon l'invention comprend également au moins une charge minérale pulvérulente, telle que carbonate de calcium, hydrate d'alumine, kaolin ou talc, présente à raison de 25 à 300 parties environ en poids pour 100 parties en poids du polyester insaturé et du monomère éthyléniquement insaturé.

La composition moulable en masse selon l'invention comprend aussi des fibres de verre courtes, c'est-à-dire de longueur au plus égale à 15 mm, de manière à être transformable par injection, présentes à raison de 20 à 50 parties environ en poids pour 100 parties en poids du mélange de polyester insaturé, de monomère éthyléniquement insaturé et de charge minérale en poudre.

Le diisocyanate utilisable dans les compositions moulables en masse selon l'invention peut être aliphatique, cycloaliphatique et/ou aromatique. Comme exemples on peut citer notamment le 4,4'-diphénylméthane diisocyanate, le 2,4- et le 2,6-toluènediisocyanate, l'isophorone diisocyanate, le tétraméthylène diisocyanate, le pentaméthylène diisocyanate, l'hexa-méthylène diisocyanate, le 4,4'-dicyclohexylméthane diisocyanate et le polyméthylène polyphénylisocyanate. Il peut aussi être utilisé sous forme de prépolymère du type polyurée ou polyuréthane de faible poids moléculaire, c'est-à-dire en faisant réagir l'un des diisocyanates désignés ci-dessus avec une polyamine ou un polyol de faible poids moléculaire. Dans ce dernier cas on préfère utiliser un alkylène glycol tel que le dipropylène glycol, le tripropylène glycol, le diéthylène glycol, le triéthylène glycol, le tétra-éthylèneglycol, le néopentylglycol, le 1,2- et le 1,3-butylène glycols. Il peut encore être utilisé sous la forme d'urétonimine en chauffant l'un des diisocyanates désignés ci-dessus à température élevée en présence d'un catalyseur phosphoré de manière à former un polycarbodiimide puis en faisant réagir ce dernier avec un autre groupe isocyanate, par exemple comme décrit dans le brevet US-A- 4 014 935.

De manière avantageuse, les compositions moulables en masse selon l'invention peuvent en outre comprendre au moins un agent bloquant de la fonction isocyanate. De manière connue, l'introduction d'un tel agent permet, lorsque le prépolymère à groupes terminaux isocyanates bloqués est chauffé, de provoquer une réaction dite de déblocage qui se traduit par un allongement et une réticulation des chaînes du prépolymère et - en conséquence - par une amélioration des propriétés mécaniques du matériau. Parmi les agents bloquants de la fonction isocyanate qui peuvent être utilisés, on peut citer notamment des alcools tertiaires, des amines aromatiques secondaires, des mercaptans, des lactames, des phénols monohydriques et des imides. On préfèrera toutefois des agents dont la température de déblocage ne dépasse pas 120°C environ et qui sont capables de participer à la formation du réseau tridimensionnel en se copolymérisant avec les doubles liaisons du monomère éthyléniquement insaturé et/ou du prépolymère polyester insaturé. Comme exemples de tels agents on peut citer notamment :
- des hydroxamates de formule : 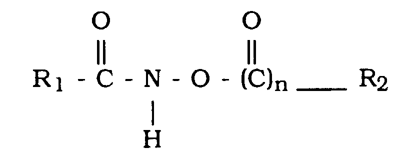 dans laquelle n = 0 ou 1, R₁ et R₂ représentant chacun un groupement hydrocarboné ayant de 1 à 20 atomes de carbone et l'un au moins de R₁ et R₂ comportant au moins une insaturation éthylénique.
- des cétoximes de formule : 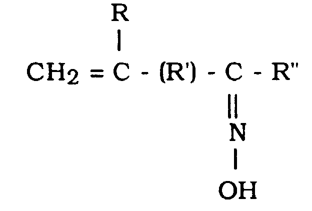 dans laquelle :
   . R est soit l'hydrogène soit un radical alkyle,
   . R' est une liaison simple ou un radical quelconque, notamment un radical aliphatique ou amide, devant ne pas comporter d'atomes ou de groupement d'atomes qui gèneraient la polymérisation de la liaison éthylénique et ne pas comporter d'atomes ou de groupement d'atomes qui empêcheraient la formation du radical oxime sur le carbone voisin,
   . R" est un radical quelconque, alkyle par exemple, choisi de façon à ne pas gêner la formation du radical oxime porté par le carbone voisin.

Dans le cas où les compositions selon l'invention comprennent un agent bloquant de la fonction isocyanate, il est souhaitable que celui-ci soit présent en quantité telle qu'une partie seulement, de préférence de 10 % à 50 % environ, des fonctions isocyanates présentes soient bloquées.

Par (alk)acrylate hydroxylé au sens de la présente invention, on entend un composé de formule générale : 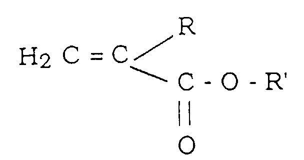 dans laquelle R est choisi parmi l'atome d'hydrogène et les radicaux alkyles ayant de préférence 1 à 4 atomes de carbone, et R' est un radical hydrocarboné, de préférence un radical alkyle, porteur d'au moins une fonction hydroxyle, située de préférence en extrémité de chaîne. Comme exemples de tels composés utilisables dans la présente invention pour former le produit de réaction constituant la phase polymère durcissable, on peut citer notamment les acrylates, méthacrylates et éthylacrylates d'hydroxylalkyle comme les (meth)acrylates de 2-hydroxyéthyle et d'hydroxypropyle, les esters acryliques ou méthacryliques partiels de composés di- ou polyhydroxylés comme le mono(méth)acrylate d'éthylène glycol, de propylène glycol-1,2 ou 1,3, de butylène glycol-1,4, d'hexaméthylèneglycol 1,6, de diéthylène glycol, de triéthylène glycol, de dipropylène glycol, le mono(méth)acrylate de glycérol, le mono(méth)acrylate de pentaérythritol.

Pour l'efficacité de la présente invention, relativement à l'objectif technique visé tel qu'exprimé précédemment, les proportions de la résine polyester insaturée, du polyisocyanate organique et de l'(alk)acrylate hydroxylé doivent de préférence suivre la règle : le produit de réaction des trois composés est formé à partir d'un mélange comprenant, pour 100 parties en poids de résine polyester insaturée, de 3 à 20 parties en poids environ d'(alk)acrylate hydroxylé et une quantité de polyisocyanate organique calculée de telle sorte que le rapport molaire des fonctions -NCO du polyisocyanate organique aux fonctions hydroxyle de l'(alk)acrylate hydroxylé, r = NCO/OH, soit compris entre 0,6 et 1,1 environ et de préférence entre 0,75 et 0,95 environ. Cette règle correspond le plus souvent, en fonction du polyisocyanate organique choisi et de l'(alk)acrylate hydroxylé choisi, a un rapport en poids polyisocyanate organique / (alk)acrylate hydroxylé compris entre 1 et 6 environ et de préférence entre 1,2 et 4 environ.

La quantité de monomère éthyléniquement insaturé mise en oeuvre dans les compositions selon l'invention est une quantité conventionnelle pour des compositions moulables à base de résine polyester insaturée. Elle est donc généralement comprise entre 10 et 50 parties en poids environ pour 100 parties de résine polyester insaturée.

La phase polymère durcissable présente dans les compositions selon l'invention résulte soit de la réaction entre la résine polyester insaturée, le polyisocyanate organique et l'(alk)acrylate hydroxylé soit de la réaction entre la résine polyester insaturée et le monoisocyanate éthyléniquement insaturé formé préalablement à partir d'un polyisocyanate organique et d'un (alk)acrylate hydroxylé, ces deux modes d'obtention devant être considérés comme équivalents.

Les compositions moulables selon l'invention peuvent en outre comprendre :
- au moins un agent capable de former des radicaux à la température de moulage. Comme agents appropriés, on peut citer entre autres des peroxydes organiques, peroxydicarbonates et peroxyesters tels que le peroxyde de benzoyle, l'hydroperoxyde de butyle tertiaire, le peroxyde de butyle tertiaire, le peroxyde de dicumyle, le 2,2 bis (ter-butylperoxy) butane, le paracétal, le 1,1-bis (t-butylperoxy) 3,3,5-triméthyl cyclohexane, le perbenzoate de butyle tertiaire, le peroxyoctoate de butyle tertiaire, le ter-butyl peroxy isopropylcarbonate, le perisononanoate de butyle tertiaire, le permaléinate de butyle tertiaire, le péracétal cyclique, le 2,5-diméthyl-2,5-bis (2-éthylhexolperoxy) hexane, le peroxyde de méthyléthylcétone, le péroxyoctoate de tertioamyle, le 2,5-dipéroxy-octoate, ou encore le peroxyde de 2,4-pentanédione.
- au moins un agent thixotropique tel que la silice colloïdale ou l'argile pyrolysée à raison de 0,5 à 1,5 en poids environ pour 100 parties de composition.
- une quantité efficace d'au moins un inhibiteur de réticulation. Comme exemples d'inhibiteurs de réticulation utilisables, on peut citer notamment la phénothiazine, l'éther méthylique de l'hydroquinone, la N,N-diéthylhydroxyamine, le nitrobenzène, le di-tertiobutylcatechol, l'hydroquinone, le p-anilinophénol, le phosphite de di-(2-éthylhexyl)-octylphényle, le 2,5-ditertiobutyl-4-hydroxytoluène, le bleu de méthylène et leurs mélanges en toutes proportions. Une quantité efficace d'inhibiteur de réticulation est généralement comprise entre 0,01 % et 0,2 % en poids de résine polyester insaturée.
- au moins un retardateur de flamme tel qu'un hydrate d'alumine,
- au moins un pigment organique ou minéral,
- au moins une résine thermoplastique non réactive, telle que polystyrène, polyacétate de vinyle ou polyméthacrylate de méthyle, capable de réduire le phénomène de retrait de la résine polyester insaturée chargée pendant le moulage. Une telle résine peut être introduite sous forme de solution dans un monomère tel que le styrène.
- au moins un catalyseur de réaction des fonctions isocyanates avec la résine polyester insaturée, qui peut être choisi parmi :
   (a) des amines tertiaires telles que le bis (diméthylaminoéthyl) éther, le triméthylamine, la triéthylamine, la N-méthylmorpholine, la N-éthyl-morpholine, la N,N-diméthylbenzylamine, la N,N-diméthyl-éthano-lamine, la N,N,N',N'-tétraméthyl-1,3-butanediamine, la triéthylanolamine, le 1,4-diazabicyclo [2.2.2.] octane et l'oxyde de pyridine.
   (b) des phosphines tertiaires telles que les trialkylphosphines et les dialkylbenzylphosphines,
   (c) des bases fortes telles que les hydroxyles, alcoolates et phénolates de métaux alcalins et alcalino-terreux,
   (d) des sels métalliques d'acides forts tels que les chlorures ferrique, stannique, stanneux et de bismuth, le trichlorure d'antimoine et le nitrate de bismuth,
   (e) des chélates tels que ceux pouvant être obtenus à partir d'acétylacétone, de benzoylacétone, de trifluoroacétylacétone, d'acétoacétate d'éthyle, de salicylaldéhyde, de cyclopentanone-2-carboxylate, d'acétylacétoimine, de bis-acétylacétonealkylènediimines, de salicylaldéhydeimine et à partir de métaux tels que le beryllium, le magnésium, le zinc, le cadmium, le plomb, le titane, le zirconium, l'étain, l'arsenic, le bismuth, le chrome, le molybdène, le manganèse, le fer, le cobalt et le nickel,
   (f) les alcolates et phénolates de métaux tels que Ti(OR)₄, Sn(OR)₄, Sn(OR)₂ et Al(OR)₃ dans lesquels R est un groupe alkyle ou aryle,
   (g) des sels d'acides organiques et des métaux tels que les alcalins et alcalino-terreux, l'aluminium, l'étain, le plomb, la manganèse, le cobalt, le nickel et le cuivre, par exemple l'acétate de sodium, la laurate de potassium, l'hexanoate de calcium, les acétate, octoate et oléate stanneux, l'octoate de plomb, les naphténates de manganèse et de cobalt, et
   (h) les métaux carbonyles du fer et du cobalt et les dérivés organométalliques de l'étain tétravalent, de l'arsenic trivalent et pentavalent, de l'antimoine et du bismuth ; parmi ces dérivés on préfère plus particulièrement les sels de dialkylétain d'acides carboxyliques tels que le diacétate de dibutylétain, le dilaurate de dibutylétain, le maléate de dibutylétain, le diacétate de dilaurylétain, le diacétate de dioctylétain, le bis (4-méthylaminobenzoate) de dibutylétain, le bis (6-méthylaminocaproate) de dibutylétain, les hydroxydes de trialkylétain, les oxydes de dialkylétain, les dialcoxydes de dialkylétain et les dichlorures de dialkylétain.
Ce catalyseur est généralement utilisé à raison de 0,01 à 2 % en poids du polyisocyanate présent dans le premier mélange.

L'(alk)acrylate hydroxylé caractéristique de la présente invention est parfaitement miscible dans le milieu organique constitué de la résine polyester insaturée du monomère éthyléniquement insaturé et du polyisocyanate organique. On a pu observer que les pièces moulées en masse à partir des compositions selon l'invention présentent un meilleur aspect macroscopique que les pièces moulées à partir des compositions ne contenant pas d'(alk)acrylate hydroxylé, ce qui constitue un avantage évident pour la fabrication de pièces d'aspect pour l'industrie.

Le mécanisme chimique présumé de la formation du produit de réaction dans la phase polymère durcissable est le suivant : l'une des fonctions isocyanates du polyisocyanate organique réagit avec l'une des fonctions hydroxyles de la résine polyester insaturée, tandis que l'autre fonction isocyanate du polyisocyanate organique réagit avec la fonction hydroxyle portée par le radical R' du composé de formule (I), cette double réaction conduisant à une structure qui peut être représentée comme suit : 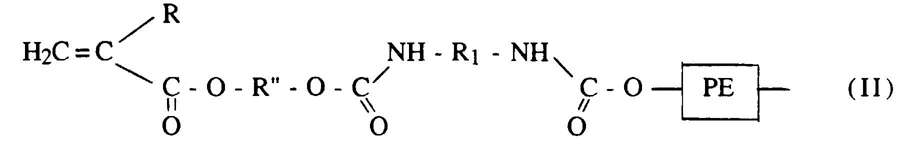 formule dans laquelle R a la même signification que dans la formule (I), R" est la fraction hydrocarbonée du radical R' de la formule (I), R₁ est la fraction hydrocarbonée du polyisocyanate organique et PE désigne la séquence principale de la résine polyester insaturée.

La formation du produit de réaction dans la phase polymère durcissable s'accompagne d'une augmentation importante de la viscosité du mélange des constituants. Cette augmentation, qui peut atteindre une multiplication de la viscosité par un facteur allant de 30 à 100 environ, se produit de manière progressive dans le temps. La viscosité se stabilisant généralement après une durée, dépendante de la température à laquelle le mélange des constituants est maintenu et étant d'autant plus courte que la température est plus élevée, il est généralement souhaitable, et le plus souvent nécessaire, de maintenir le mélange pendant au moins une heure à une température comprise entre 20°C et 50°C environ avant de procéder au moulage de la composition selon l'invention.

Un second objet de la présente invention consiste en effet en un procédé de moulage d'une composition selon l'invention - telle que décrite précédemment - comprenant les étapes suivantes :
(a) préparation d'un mélange comprenant au moins une charge minérale en poudre, au moins une résine polyester insaturée, au moins un monomère éthyléniquement insaturé, au moins un polyisocyanate organique, au moins un (alk)acrylate hydroxylé et au moins un agent capable de former des radicaux libres,
(b) distribution simultanée, dans une installation de mélange, du mélange préparé à l'étape (a) d'une part et de fibres de verre de longueur au plus égale à 15 mm d'autre part, de manière à obtenir à la sortie de l'installation des feuilles de consistance pâteuse pouvant être coupées à la longueur désirée,
(c) transfert de la composition moulable obtenue à l'étape (b) vers un moule, et
(d) moulage de la composition à une température comprise de préférence entre 100°C et 180°C environ pendant une durée suffisante pour provoquer la réticulation de la résine polyester insaturée par le monomère éthyléniquement insaturé.
A l'issue de l'étape (d), le matériau réticulé peut en outre être soumis à une phase de post-réticulation à une température de préférence comprise entre 150 et 180°C environ et pendant une durée de préférence comprise entre 10 et 120 minutes environ. La durée de moulage de l'étape (d) dépend bien entendu des proportions des composants du mélange préparé à l'étape (a) ainsi que des dimensions de la pièce moulée à produire mais est généralement comprise entre 1 et 10 minutes environ. L'initiateur de radicaux libres introduit au cours de l'étape (a) a déjà été décrit précédemment et doit être capable de former les radicaux à la température de moulage utilisée dans l'étape (d).

Le procédé selon l'invention peut être mis en oeuvre de manière discontinue pour le moulage de BMC, auquel cas les étapes (a) et (b) peuvent être combinées en une seule étape, les fibres de verre courtes (dans ce cas, de taille ne dépassant de préférence pas 6 mm) étant introduites dans un mélangeur en même temps que les autres ingrédients de la composition moulable.

Le procédé selon l'invention peut également être mis en oeuvre de manière continue pour le moulage de compositions imprégnables en continu (encore désignées CIC d'après l'abréviation anglaise correspondante), auquel cas l'étape (b) est distincte de et consécutive à l'étape (a) et il est préférable que, entre les étapes (b) et (c) la composition soit maintenue à une température comprise entre 20° et 50°C environ pendant au moins 12 heures environ de manière à stabiliser leur viscosité.

Dans l'une et l'autre variante - continue ou discontinue - du procédé selon l'invention, le moulage au cours de l'étape (d) peut être effectué soit par injection soit par compression.

Un troisième objet de la présente invention consiste en des pièces moulées en masse obtenues à partir des compositions moulables selon l'invention (telles que décrites précédemment) ou par la mise en oeuvre du procédé de moulage décrit précédemment. Il peut s'agir notamment de pièces de petite surface pour l'industrie automobile, telles que des paraboles de phare, ou encore des pièces d'appareils électroménagers telles que des semelles de fer à repasser. Comme déjà indiqué ces pièces présentent un aspect macroscopique avantageux par rapport aux pièces de l'art antérieur dont la phase polymère durcie ne comprend pas d'(alk)acrylate hydroxylé.

## Revendications

1. Compositions moulables en masse comprenant des charges minérales en poudre, des fibres de verre de longueur au plus égale à 15 mm, un monomère éthyléniquement insaturé et une phase polymère durcissable qui est le produit de la réaction
d'au moins une résine polyester insaturée qui est un polyester polyol de fonctionnalité en groupement hydroxyles au moins égale à 1,5, obtenu par polycondensation d'acides ou d'anhydrides polycarboxyliques α,β éthyléniquement insaturés, le cas échéant en mélange avec des acides ou des anhydrides polycarboxylique saturés, et de diols aliphatiques saturés,
avec au moins un diisocyanate organique et
au moins un (alk)acrylate hydroxylé
**caractérisées en ce que**
le rapport molaire des fonctions NCO du diisocyanate organique aux fonctions hydroxyles de l'(alk)acrylate hydroxylé, r = NCO/OH, est compris entre 0,6 et 1,1.

2. Compositions moulables en masse, selon la revendication 1, caractérisées en ce que la masse moléculaire de la résine polyester insaturée est comprise entre 250 et 5 000.

3. Compositions moulables en masse selon l'une des revendications 1 et 2, caractérisées en ce que la charge minérale en poudre est présente à raison de 25 à 300 parties en poids du polyester insaturé et du monomère éthyléniquement insaturé.

4. Compositions moulables en masse selon l'une des revendications 1 à 3, caractérisées en ce que les fibres de verre courtes sont présentes à raison de 20 à 50 parties en poids pour 100 parties en poids du mélange de polyester insaturé, de monomère éthyléniquement insaturé et de charge minérale en poudre.

5. Compositions moulables en masse selon l'une des revendications 1 à 4, caractérisées en ce que l'(alk)acrylate hydroxylé est un composé de formule générale 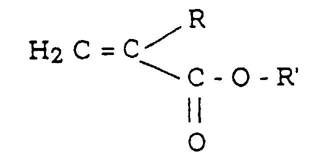 dans laquelle R est choisi parmi l'atome d'hydrogène et les radicaux alkyles ayant de préférence 1 à 4 atomes de carbone, et R' est un radical hydrocarboné, de préférence un radical alkyle, porteur d'au moins une fonction hydroxyle.

6. Compositions moulables en masse selon l'une des revendications 1 à 5, caractérisées en ce que la phase polymère durcissable est formée à partir d'un mélange comprenant, pour 100 parties en poids de résine polyester insaturée, de 3 à 20 parties en poids d'(alk)acrylate hydroxylé.

7. Compositions moulables en masse selon l'une des revendications 1 à 6, caractérisées en ce que la quantité de monomère éthyléniquement insaturé est comprise entre 10 et 50 parties en poids pour 100 parties de résine polyester insaturée.

8. Compositions moulables en masse selon l'une des revendications 1 à 7, caractérisées en ce qu'elles comprennent en outre au moins un initiateur de radicaux libres.

9. Procédé de moulage comprenant les étapes suivantes :
(a) préparation d'un mélange comprenant au moins une charge minérale en poudre, au moins une résine polyester insaturée, au moins un monomère éthyléniquement insaturé, au moins un polyisocyanate organique, au moins un (alk)acrylate d'hydroxyle et au moins un agent- capable de former des radicaux libres,
(b) distribution simultanée, dans une installation de mélange, du mélange préparé à l'étape (a) d'une part et de fibres de verre de longueur au plus égale à 15 mm d'autre part de manière à obtenir à la sortie de l'installation des feuilles de consistance pâteuse pouvant être coupées à la longueur désirée,
(c) transfert de la composition moulable obtenue à l'étape (b) vers un moule, et
(d) moulage de la composition à une température comprise entre 100°C et 180°C pendant une durée suffisante pour provoquer la réticulation de la résine polyester insaturée par le monomère éthyléniquement insaturé, caractérisé en ce que la résine polyester insaturée de l'étape (a) est un polyester polyol de fonctionnalité en groupement hydroxyles au moins égale à 1,5 obtenu par polycondensation d'acides ou anhydrides polycarboxyliques α, β, éthyléniquement insaturés, le cas échéant en mélange avec des acides ou anhydrides polycarboxyliques saturés, et de diols aliphatiques saturés, et en ce que le polyisocyanate organique est un diisocyanate.

10. Pièces moulées en masse obtenues à partir de compositions moulables selon la revendication 1 à 8 ou par la mise en oeuvre du procédé de moulage selon la revendication 9.

## Claims

1. Bulk mouldable compositions comprising powdered inorganic fillers, glass fibres with a length of not more than 15 mm, an ethylenically unsaturated monomer and a curable polymer phase which is the product of the reaction,
of at least one unsaturated polyester resin which is a polyesterpolyol with a functionality as regards hydroxyl groups of at least 1.5, obtained by polycondensation of α,β-ethylenically unsaturated polycarboxylic acids or anhydrides, if appropriate mixed with saturated polycarboxylic acids or anhydrides, and of saturated aliphatic diols,
with at least one organic diisocyanate and
at least one hydroxylated (alk)acrylate
**characterized in that**
the molar ratio of the NCO functional groups of the organic diisocyanate to the hydroxyl functional groups of the hydroxylated (alk)acrylate, r = NCO/OH, is between 0.6 and 1.1.

2. Bulk mouldable compositions according to Claim 1, characterized in that the molecular mass of the unsaturated polyester resin is between 250 and 5000.

3. Bulk mouldable compositions according to one of Claims 1 and 2, characterized in that the powdered inorganic filler is present in a proportion of 25 to 300 parts by weight of the unsaturated polyester and of the ethylenically unsaturated monomer.

4. Bulk mouldable compositions according to one of Claims 1 to 3, characterized in that the short glass fibres are present in the proportion of 20 to 50 parts by weight per 100 parts by weight of the mixture of unsaturated polyester, ethylenically unsaturated monomer and powdered inorganic filler.

5. Bulk mouldable compositions according to one of Claims 1 to 4, characterized in that the hydroxylated (alk)acrylate is a compound of general formula 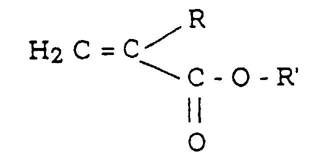 in which R is chosen from the hydrogen atom and alkyl radicals preferably having 1 to 4 carbon atoms and R' is a hydrocarbon radical, preferably an alkyl radical, carrying at least one hydroxyl functional group.

6. Bulk mouldable compositions according to one of Claims 1 to 5, characterized in that the curable polymer phase is formed from a mixture comprising, per 100 parts by weight of unsaturated polyester resin, from 3 to 20 parts by weight of hydroxylated (alk)acrylate.

7. Bulk mouldable compositions according to one of Claims 1 to 6, characterized in that the amount of ethylenically unsaturated monomer is between 10 and 50 parts by weight per 100 parts of unsaturated polyester resin.

8. Bulk mouldable compositions according to one of Claims 1 to 7, characterized in that they additionally comprise at least one free radical initiator.

9. Moulding process comprising the following stages:
(a) preparation of a mixture comprising at least one powdered inorganic filler, at least one unsaturated polyester resin, at least one ethylenically unsaturated monomer, at least one organic polyisocyanate, at least one hydroxylated (alk)acrylate and at least one agent capable of forming free radicals,
(b) simultaneous distribution, in a mixing plant, of the mixture prepared in stage (a), on the one hand, and of glass fibres with a length of not more than 15 mm, on the other hand, so as to obtain, at the outlet of the plant, sheets with a pasty consistency which can be cut to the desired length,
(c) transfer of the mouldable composition obtained in stage (b) to a mould and
(d) moulding of the composition at a temperature of between 100°C and 180°C for a period of time which is sufficient to cause crosslinking of the unsaturated polyester resin by the ethylenically unsaturated monomer, characterized in that the unsaturated polyester resin of stage (a) is a polyesterpolyol with a functionality as regards hydroxyl groups of at least 1.5, obtained by polycondensation of α,β-ethylenically unsaturated polycarboxylic acids or anhydrides, if appropriate as a mixture with saturated polycarboxylic acids or anhydrides, and of saturated aliphatic diols, and in that the organic polyisocyanate is a diisocyanate.

10. Bulk moulded parts obtained from mouldable compositions according to Claims 1 to 8 or by the use of the moulding process according to Claim 9.

## Patentansprüche

1. Masseformbare Zusammensetzungen, enthaltend mineralische Füllstoffe in Pulverform, Glasfasern mit einer Länge von höchstens 15 mm, ein ethylenisch ungesättigtes Monomer sowie eine härtbare Polymerphase, bei der es sich um das Reaktionsprodukt
aus mindestens einem Harz aus ungesättigtem Polyester, bei dem es sich um ein Polyester-Polyol mit einer Hydroxylgruppenfunktionalität von mindestens 1,5 handelt, das durch Polykondensation von α,ß-ethylenisch ungesättigten Polycarbonsäuren bzw. -säureanhydriden, gegebenenfalls in Mischung mit gesättigten Polycarbonsäuren bzw. -säureanhydriden, mit gesättigten aliphatischen Diolen hergestellt wurde,
mindestens einem organischen Diisocyanat und
mindestens einem hydroxylgruppenhaltigen (Alk)acrylat handelt,
dadurch gekennzeichnet, daß
das Molverhältnis der NCO-Gruppen des organischen Diisocyanats zu den Hydroxylgruppen des hydroxylgruppenhaltigen (Alk)acrylats, r=NCO/OH, zwischen 0,6 und 1,1 liegt.

2. Masseformbare Zusammensetzungen nach Anspruch 1, dadurch gekennzeichnet, daß die Molmasse des Harzes aus ungesättigtem Polyester zwischen 250 und 5000 liegt.

3. Masseformbare Zusammensetzungen nach einem der Ansprüche 1 und 2, dadurch gekennzeichnet, daß die mineralischen Feststoffe in Pulverform in einer Menge von 25 bis 300 Teilen, bezogen auf das Gewicht des ungesättigten Polyesters und des ethylenisch ungesättigten Monomers, vorliegen.

4. Masseformbare Zusammensetzungen nach einem der Ansprüche 1 bis 3, dadurch gekennzeichnet, daß die Glaskurzfasern in einer Menge von 20 bis 50 Gew.-Teilen pro 100 Gew.-Teile der Mischung aus ungesättigtem Polyester, ethylenisch ungesättigtem Monomer und mineralischen Füllstoffen in Pulverform vorliegen.

5. Masseformbare Zusammensetzungen nach einem der Ansprüche 1 bis 4, dadurch gekennzeichnet, daß das hydroxylgruppenhaltige (Alk)acrylat eine Verbindung der allgemeinen Formel 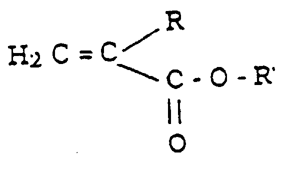 ist, worin R aus der Gruppe bestehend aus Wasserstoffatom und Alkylresten mit vorzugsweise 1 bis 4 Kohlenstoffatomen ausgewählt ist und R' einen Kohlenwasserstoffrest, vorzugsweise einen Alkylrest, mit mindestens einer Hydroxylgruppe bedeutet.

6. Masseformbare Zusammensetzungen nach einem der Ansprüche 1 bis 5, dadurch gekennzeichnet, daß die härtbare Polymerphase aus einer Mischung hergestellt wird, die pro 100 Gew.-Teile Harz aus ungesättigtem Polyester 3 bis 20 Gew.-Teile hydroxylgruppenhaltiges (Alk)acrylat enthält.

7. Masseformbare Zusammensetzungen nach einem der Ansprüche 1 bis 6, dadurch gekennzeichnet, daß die Menge an ethylenisch ungesättigtem Monomer pro 100 Teile Harz aus ungesättigtem Polyester zwischen 10 bis 50 Gew.- Teilen liegt.

8. Masseformbare Zusammensetzungen nach einem der Ansprüche 1 bis 7, dadurch gekennzeichnet, daß sie außerdem mindestens einen freie Radikale bildenden Initiator enthalten.

9. Formgebungsverfahren umfassend folgende Schritte:
(a) Herstellung einer Mischung, enthaltend mindestens einen mineralischen Füllstoff in Pulverform, mindestens ein Harz aus ungesättigtem Polyester, mindestens ein ethylenisch ungesättigtes Monomer, mindestens ein organisches Polyisocyanat, mindestens ein Hydroxyl(alk)acrylat sowie mindestens ein zur Bildung von freien Radikalen befähigtes Mittel,
(b) gleichzeitige Verteilung zum einen der in Schritt (a) hergestellten Mischung und zum anderen der Glasfasern in einer Mischvorrichtung, und zwar derart, daß am Ausgang der Vorrichtung Blätter mit einer pastösen Konsistenz erhalten werden, die sich auf die gewünschte Länge schneiden lassen,
(c) Überführung der in Schritt (b) erhaltenen formbaren Zusammensetzung in eine Form sowie
(d) Formgebung der Zusammensetzung bei einer Temperatur zwischen 100°C und 180°C über einen zur Vernetzung des Harzes aus ungesättigtem Polyester durch das ethylenisch ungesättigte Monomer ausreichenden Zeitraum, dadurch gekennzeichnet, daß das Harz aus ungesättigtem Polyester aus Schritt (a) ein Polyester-Polyol mit einer Hydroxylgruppenfunktionalität von mindestens 1,5 ist, das durch Polykondensation von α,β-ethylenisch ungesättigten Polycarbonsäuren bzw. -säureanhydriden, gegebenenfalls in Mischung mit gesättigten Polycarbonsäuren bzw. -säureanhydriden, mit gesättigten aliphatischen Diolen hergestellt wurde, und daß das organische Polyisocyanat ein Diisocyanat ist.

10. Durch Masseformung hergestellte Formteile, die aus formbaren Zusammensetzungen nach Ansprüchen 1 bis 8 oder durch Durchführung des Formgebungsverfahrens nach Anspruch 9 erhalten werden.
